# EUROPÄISCHE PATENTSCHRIFT

(11) **EP 3 147 689 B1**
(45) Veröffentlichungstag und Bekanntmachung des Hinweises auf die Patenterteilung: **14.11.2018**
(21) Anmeldenummer: 16186878.1
(22) Anmeldetag: 01.09.2016
(51) Int. Cl.: G01S 17/02, G01S 17/10, G01S 7/481, G01S 7/486, G01S 7/487, G01S 7/497

(54) **VERFAHREN ZUR DETEKTION EINES OBJEKTS**
METHOD FOR DETECTING AN OBJECT
PROCEDE DE DETECTION D'UN OBJET

(30) Priorität: 28.09.2015 DE 102015116368
(43) Veröffentlichungstag der Anmeldung: 29.03.2017
(73) Patentinhaber: SICK AG, 79183 Waldkirch/Breisgau (DE)
(72) Erfinder: WASLOWSKI, Kai, 79341 Waldkirch (DE); ZWÖLFER, Ulrich, 79341 Waldkirch (DE)
(74) Vertreter: Manitz Finsterwald Patentanwälte PartmbB

(56) Entgegenhaltungen:
- WO-A2-2008/152647
- DE-A1-102011 005 740
- JUSSI-PEKKA JANSSON ET AL: "A Multichannel High-Precision CMOS Time-to-Digital Converter for Laser-Scanner-Based Perception Systems", IEEE TRANSACTIONS ON INSTRUMENTATION AND MEASUREMENT, IEEE SERVICE CENTER, PISCATAWAY, NJ, US, Bd. 61, Nr. 9, 1. September 2012 (2012-09-01), Seiten 2581-2590, XP011455780, ISSN: 0018-9456, DOI: 10.1109/TIM.2012.2190343

## Beschreibung

Die vorliegende Erfindung betrifft ein Verfahren zur Detektion eines Objekts, bei welchem in einen Detektionsbereich mittels einer Lichtquelle wiederholt Pulse von Sendelicht ausgesandt werden und aus dem Detektionsbereich empfangenes Empfangslicht mittels einer Detektionsvorrichtung, die mehrere Detektoren aufweist, erfasst wird. Gemäß dem Verfahren wird ein mehrere Detektoren umfassender Auswertebereich definiert, innerhalb dessen Empfangslicht auf die Detektoren trifft, wobei anhand der Intensität des Empfangslichts die Position und/oder die Größe des Auswertebereichs festgelegt wird.

Derartige Verfahren zur Detektion eines Objekts werden beispielsweise zur Anwesenheitskontrolle oder zur Erfassung von bewegten Objekten verwendet. Insbesondere können solche Verfahren in industriellen Prozessen eingesetzt werden, um z.B. auf Förderbändern transportierte Gegenstände zu detektieren.

Hierbei kann das Problem auftreten, dass zwischen dem zu detektierenden Objekt und der Lichtquelle z.B. Staubpartikel in der Luft vorhanden sind, die die von der Lichtquelle ausgesandten Pulse von Sendelicht reflektieren.

Ein reflektierendes Staubpartikel kann fälschlicherweise als (zusätzliches) Objekt identifiziert werden, was in der Auslösung eines ungewünschten Schaltsignals resultieren kann. Auch kann es vorkommen, dass dann dem eigentlich zu detektierenden Objekt eine falsche Entfernung zugeordnet wird.

Unter Staub- oder Verschmutzungspartikeln können beispielsweise in der Luft schwebende Teilchen, wie Pollen, Abriebpartikel und dergleichen verstanden werden.

Insbesondere unter der Prämisse einer hohen Ortsauflösung, welche mit einer starken Fokussierung des von der Lichtquelle ausgesandten Sendelichts einhergeht, und der Bedingung einer hohen Empfindlichkeit kann häufig eine zuverlässige Unterdrückung der fälschlichen Erkennung solcher Staub- und Verschmutzungspartikel nicht erreicht werden.

Aus der WO 2008/152647 A2 ist ein Verfahren gemäß dem Oberbegriff des Anspruchs 1 bekannt, bei welchem zunächst mittels einer Grobmessung die Anwesenheit eines Objekts ermittelt wird und anschließend eine Feinmessung nur in Bereichen durchgeführt wird, die vom Objekt bestrahlt werden. Die DE 10 2011 005 740 A1 lehrt die Verwendung eines Referenzdetektors, um Laufzeitunterschiede zwischen Detektorelementen zu eliminieren. In Jussi-Pekka Jansson et al. "A Multichannel High-Precision CMOS Time-to-Digital Converter for Laser-Scanner-Based Perception Systems" (IEEE Transactions on Instrumentation and Measurement, Bd. 61, Nr. 9, Seiten 2581-2590, XP011455780) wird ein mehrkanaliger Time-to-Digital-Converter beschrieben.

Es ist die der Erfindung zugrundeliegende Aufgabe, ein Verfahren der eingangs genannten Art anzugeben, welches eine robuste Objekterkennung auch unter schwierigen, insbesondere staubigen, Umgebungsbedingungen ermöglicht.

Diese Aufgabe wird durch ein Verfahren gemäß Anspruch 1 und insbesondere dadurch gelöst, dass innerhalb des Auswertebereichs mehrere Teilregionen festgelegt werden, unter Verwendung mehrerer aufeinanderfolgender Pulse von Sendelicht die Teilregionen zumindest teilweise nacheinander ausgewertet werden und die Auswertungen der Teilregionen kombiniert werden, um die Anwesenheit eines Objekts in dem Detektionsbereich festzustellen.

Anders ausgedrückt wird - anstelle der herkömmlichen Auswertung des gesamten Auswertebereichs jeweils zu einem einzigen Zeitpunkt - die Auswertung des jeweiligen Empfangslichts auf mehrere Teilregionen aufgeteilt, die zu unterschiedlichen Zeitpunkten ausgewertet werden, wobei die Teilregionen auch teilweise gleichzeitig ausgewertet werden können. Die Ergebnisse der Auswertung der einzelnen Teilregionen werden anschließend kombiniert, um die Anwesenheit eines Objekts festzustellen oder festzustellen, dass der Detektionsbereich "leer" ist, d.h. frei von zu detektierenden Objekten ist.

Die Erfindung macht sich die Erkenntnis zunutze, dass ein Staubpartikel im Vergleich zu dem zu detektierenden Objekt relativ klein ist. Dementsprechend wird das von dem Staubpartikel reflektierte Licht, das heißt dessen Empfangslicht, nur auf eine geringe Anzahl von Detektoren der Detektionsvorrichtung und damit nur in z.B. eine Teilregion zurückgestrahlt.

Die vorliegende Beschreibung nimmt mehrheitlich auf Staubpartikel Bezug. Stattdessen gilt das Beschriebene aber auch für andere kleine Störquellen oder Partikel wie Pollen, Verschmutzungspartikel oder ähnliches, auch wenn beispielhaft nur Staubpartikel genannt sind.

Bei der herkömmlichen (nicht erfindungsgemäßen) Auswertung des gesamten Auswertebereichs über mehrere Pulse von Sendelicht der Lichtquelle würde nun bei jedem Puls ein Signal des Staubpartikels verarbeitet werden, wobei das Signal über mehrere Pulse hinweg aufsummiert würde und damit z.B. bei einer Energieauswertung so viel von dem Staubpartikel zurückgeworfene Energie ausgewertet wird, dass das Staubpartikel (fälschlicherweise) als eigenständiges Objekt erkannt wird.

Durch die erfindungsgemäße Aufteilung auf die Auswertung von mehreren Teilregionen nacheinander kann das von dem Staubpartikel zurückgestrahlte Licht beispielsweise nur einmalig (d.h. bei der Auswertung der Teilregion, in die das von dem Staubpartikel reflektierte Licht fällt) in die Auswertung eingehen. Damit umfasst das von dem Staubpartikel stammende Empfangslicht einen deutlich geringeren Energieanteil an dem gesamten ausgewerteten Empfangslicht, nämlich bei n Teilregionen üblicherweise nur noch den n-ten Teil. Folglich wird das Staubpartikel in der Regel nicht fälschlicherweise als Objekt erkannt, da die in die Auswertung eingeflossene rückgestrahlte Energie nicht für eine Erkennung als Objekt ausreicht.

Das erfindungsgemäße Verfahren ermöglicht es somit, ein Fehlschalten oder eine Fehlmessung auch bei der Anwesenheit von Staubpartikeln zu vermeiden und nur gewünschte Objekte (z.B. Objekte einer gewissen Mindestgröße) zu erkennen.

Die von der Lichtquelle ausgesandten Pulse können generell elektromagnetische Strahlung umfassen, wobei beispielsweise infrarotes Laserlicht in den Detektionsbereich ausgesandt wird. Bei einem Puls handelt es sich um das zeitlich begrenzte Aussenden von Sendelicht. Als Lichtquelle wird bevorzugt ein Laser verwendet.

Unter dem Detektionsbereich ist ein Raumbereich zu verstehen, innerhalb dessen Objekte erkannt werden können oder sollen.

Das von der Lichtquelle emittierte Sendelicht wird im Detektionsbereich rückgestrahlt, beispielsweise durch Reflexion oder Remission, wobei rückgestrahltes Sendelicht als Empfangslicht bezeichnet wird. Sonstiges aus dem Delektionsbereich empfangenes Licht wird als Streulicht oder Fremdlicht bezeichnet. Insbesondere kann es vorkommen, dass Streulicht oder Fremdlicht auch von der Detektionsvorrichtung und damit von den Detektoren erfasst wird.

Das empfangene Licht wird der Detektionsvorrichtung zugeleitet, beispielsweise mittels einer Optik, die bevorzugt einen Filter umfasst. Der Filter kann z.B. ein Bandpass sein, welcher nur den Wellenlängenbereich der Lichtquelle passieren lässt, wodurch ein möglichst großen Anteil von Streulicht zurückgehalten wird.

Bei der Durchführung des Verfahrens wird der Auswertebereich dort definiert, wo sich mit sehr großer Wahrscheinlichkeit das von dem zu detektierenden Objekt rückgestrahlte Licht (Empfangslicht) befindet, d.h. auf die Detektionsvorrichtung trifft. Für die Festlegung des Auswertebereichs können Pulse von Sendelicht in den Detektionsbereich ausgesandt werden, wobei eine ungefähre Position des Objekts anhand des rückgestrahlten Lichts und insbesondere dessen Intensität ermittelt werden kann. Die Größe und Form des Auswertebereichs kann dabei an die jeweilige Anwendung angepasst sein und bevorzugt fest vorgegeben sein. Unter der Größe und der Form des Auswertebereichs ist die von denjenigen Detektoren der Detektionsvorrichtung begrenzte Fläche zu verstehen, die dem Auswertebereich zugeordnet werden. Beispielsweise kann bei einer matrixartigen Anordnung der Detektoren auf einer ebenen Fläche der Auswertebereich rechteckig, quadratisch oder annähernd kreisförmig sein. Alternativ kann der Auswertebereich eine Form haben, die an die Kontur des zu erfassenden Objekts angepasst ist. Außerhalb des Auswertebereichs auf die Detektionsvorrichtung treffendes Licht wird bei der Detektion des Objekts (abgesehen von der Festlegung des Auswertebereichs) nicht berücksichtigt.

Innerhalb des Auswertebereichs werden nun mehrere Teilregionen festgelegt, das heißt eine Teilfläche des Auswertebereichs wird jeweils einer Teilregion zugewiesen. Eine Teilregion umfasst dabei zumindest einen Detektor. Die Teilregionen können dynamisch im Betrieb gewählt werden, beispielsweise nach einem vorgegebenen Muster oder zufällig. Alternativ können die Teilregionen im Vorhinein, also z.B. bei der Herstellung einer das Verfahren durchführenden Vorrichtung, unveränderlich vorgegeben werden.

Die Teilregionen werden nacheinander bei jeweils einem oder mehreren Pulsen von Sendelicht ausgewertet. Genauer gesagt werden mittels der Lichtquelle Pulse erzeugt, wobei für jeden Puls bevorzugt nur genau eine Teilregion ausgewertet wird. Dies bedeutet, dass für die Teilregion z.B. erfasst wird, ob, zu welchem Zeitpunkt und/oder wie viel Licht aus dem Detektionsbereich auf die Teilregion fällt. Eine starke Reflektion, die mit einem intensiven Empfangslicht einhergeht, deutet dabei auf ein Objekt im Detektionsbereich hin.

Um das Empfangslicht von Streulicht zu unterscheiden, kann anhand des Unterschieds des auf die Teilregion fallenden Lichts während des Pulses im Vergleich zu dem vor und nach dem Puls auf die Teilregion fallenden Licht ermittelt werden, welcher Anteil des empfangenen Lichts Empfangslicht und welcher Anteil Streulicht ist.

Ist die Auswertung für eine Teilregion abgeschlossen, so wird die nächste Teilregion in gleicher Weise ausgewertet, das heißt es werden wiederum ein oder mehrere Pulse von Sendelicht ausgesandt und das empfangene Licht ausgewertet.

Sind die Auswertungen für alle Teilregionen abgeschlossen, werden die Auswertungen der Teilregionen kombiniert (z.B. durch Mittelwertbildung), um auf die Anwesenheit eines Objekts in dem Detektionsbereich zu schließen oder einen leeren Detektionsbereich festzustellen. Ist ein Objekt detektiert worden, so kann beispielsweise ein Schaltausgang aktiviert werden, um die Anwesenheit des Objekts anzuzeigen.

Vorteilhafte Weiterbildungen der Erfindung sind der Beschreibung, den Unteransprüchen sowie den Zeichnungen zu entnehmen.

Erfindungsgemäß wird anhand der Intensität des Empfangslichts die Position und/oder die Größe des Auswertebereichs festgelegt. Dazu kann eine Vorabauswertung sämtlicher Detektoren der Detektionsvorrichtung erfolgen, um eine Abschätzung zu erhalten, in welchem Bereich der Detektionsvorrichtung Empfangslicht eines Objekts auftreffen könnte. Diese Abschätzung kann beispielsweise anhand der Intensität des Empfangslichts erfolgen, das heißt über die Zählung der Anzahl der empfangenen Photonen. Die Position eines vermeintlichen Objekts kann somit zumindest grob bestimmt werden. Dann kann der Auswertebereich so gelegt werden, dass das von dem Objekt rückgestrahlte Licht, d.h., das zugehörige Empfangslicht, innerhalb des Auswertebereichs auf die Detektionsvorrichtung trifft. Die Größe und die erlaubten Positionen des Auswertebereichs können fest vorgegeben sein und beispielsweise bei einer Installation oder Kalibration einer entsprechenden Vorrichtung festgelegt werden.

Bevorzugt ist die Fläche zumindest einer Teilregion rechteckig oder quadratisch. Die Teilregion oder die Teilregionen können jeweils eine zusammenhängende Fläche definieren, die eine fest vorgegebene geometrische Form aufweist. Neben der genannten rechteckigen oder quadratischen Teilregion können die Teilregionen auch im Wesentlichen rund oder elliptisch gewählt werden. Bei einer rechteckigen oder quadratischen Teilregion kann das Seitenverhältnis der Teilregion dem Seitenverhältnis der von allen Detektoren der Detektionsvorrichtung belegten Fläche entsprechen.

Insbesondere können alle Teilregionen die gleiche Form aufweisen.

Gemäß einer weiteren vorteilhaften Ausführungsform umfasst jede Teilregion gleich viele Detektoren. Die Teilregionen können beispielsweise jeweils einen, vier, neun, sechzehn oder fünfundzwanzig Detektoren umfassen. Ebenfalls können die Teilregionen so gewählt sein, dass bei einer matrixartigen Anordnung der Detektoren jeweils z.B. jeder zweite, dritte, vierte, achte oder zehnte Detektor einer Teilregion zugeordnet wird. Dann bilden die Detektoren einer Teilregion keine zusammenhängende Fläche, liegen aber innerhalb des Auswertebereichs.

Gemäß einer anderen vorteilhaften Ausführungsform ist die Fläche zumindest einer Teilregion verteilt angeordnet. Anders ausgedrückt, kann eine Teilregion aus mehreren Flächen zusammengesetzt sein. Die Flächen können dabei beabstandet zueinander angeordnet sein, d.h. es ist möglich, dass eine Teilregion keine zusammenhängende Fläche bildet.

Gemäß einer weiteren vorteilhaften Ausführungsform überlappen sich zumindest zwei der Teilregionen zumindest bereichsweise oder grenzen aneinander an. Bei zwei sich überlappenden Teilregionen wird zumindest ein Detektor beiden Teilregionen zugeordnet und dementsprechend bei der Auswertung beider Teilregionen berücksichtigt. Bei aneinander angrenzenden Teilregionen liegt zumindest ein Detektor der einen Teilregion direkt benachbart zu einem Detektor der anderen Teilregion.

Besonders bevorzugt werden alle Teilregionen unterschiedlich gewählt. Dies bedeutet, dass bevorzugt keine zwei Teilregionen identisch sind, d.h. in Form und Position übereinstimmen. Alternativ können auch zwei oder mehrere Teilregionen identisch gewählt sein, um dann mehrmals an unterschiedlichen Zeitpunkten ausgewertet zu werden, was bei sich schnell bewegenden Staubpartikeln von Vorteil sein kann.

Gemäß einer weiteren vorteilhaften Ausführungsform wird/werden für die Auswertung jeder Teilregion mehr als ein Puls, bevorzugt zumindest 50 Pulse, besonders bevorzugt zumindest 250 Pulse, von Sendelicht verwendet. Die Lichtquelle sendet also für die Auswertung jeder Teilregion beispielsweise zumindest 250 Pulse in den Detektionsbereich aus, wobei zumindest 250 Mal an allen Detektoren der jeweiligen Teilregion das empfangene Licht gemessen wird. Alternativ können z.B. auch nur maximal 10 oder maximal 100 Pulse für die Auswertung jeder Teilregion verwendet werden. Jeder Puls von Sendelicht kann eine Dauer von < 1 Nanosekunde, bevorzugt von < 500 Pikosekunden, besonders bevorzugt von < 300 Pikosekunden, aufweisen.

Um eine Messdauer gegenüber einer herkömmlichen Messung nicht zu verlängern, kann die herkömmlich verwendete Pulsanzahl für eine Messung gleichmäßig auf die Teilregionen aufgeteilt werden. Beispielsweise können bei der üblichen Verwendung von 1000 Pulsen und vier Teilregionen die genannten 250 Pulse pro Teilregion verwendet werden.

Gemäß einer weiteren vorteilhaften Ausführungsform wird die Reihenfolge der Auswertung der Teilregionen in Abhängigkeit von dem Abstand der jeweiligen Teilregion zu einem Referenzpunkt festgelegt. Der Referenzpunkt kann beispielsweise der Mittelpunkt des Auswertebereichs sein. Neben dem Abstand kann auch ein Winkel den die Teilregion beispielsweise mit einer Vertikalen in dem Auswertebereich einschließt, herangezogen werden.

Besonders bevorzugt wird ein Zeitversatz zwischen dem ausgesandten Sendelicht und dem empfangenen Empfangslicht ermittelt, um die Anwesenheit und/oder den Abstand eines Objekts in dem Detektionsbereich festzustellen. Es kann also beispielsweise anhand der Zeitdauer zwischen dem Aussenden des Sendelichts und der Erfassung des zugehörigen Empfangslichts die Anwesenheit und/oder der Abstand eines Objekts in dem Detektionsbereich festgestellt werden. Somit kann - allgemein gesprochen - ein sogenanntes Lichtlaufzeitverfahren oder Time of Flight-Verfahren (TOF-Verfahren) verwendet werden, um eine Objekterkennung durchzuführen. Dies ermöglicht es beispielsweise, Objekte nur in einem bestimmten Abstand, beispielsweise in einem Abstand von 800 mm bis 1200 mm als detektiertes Objekt anzuzeigen. Objekte außerhalb dieses Bereichs werden dann nicht als Objekt angezeigt. Die Größe des Detektionsbereichs kann also insbesondere auch in Abstandrichtung einstellbar sein. Zusätzlich zu dem Lichtlaufzeitverfahren kann auch noch die Intensität des Empfangslichts für die Objekterkennung herangezogen werden.

Weiter bevorzugt sind die Detektoren Single-Photon-Avalanche-Dioden (SPADs). Bei den Detektoren kann es sich auch generell um Lawinen-Fotodioden (Avalanche-Dioden) handeln. Die Lawinen-Fotodioden können im Geiger-Modus betrieben werden, in welchem bereits ein einzelnes Photon eine Elektronen-Lawine auslösen kann, die ein einfach zu detektierendes elektrisches Signal erzeugt. Derartige Detektoren gestatten somit eine sehr empfindliche Messung und benötigen keine Verstärkerelemente, wodurch insbesondere auch dunkle Objekte gut erkannt werden können und der Platz für die Verstärker eingespart werden kann.

Aufgrund der Lawine, welche z.B. zwischen 20 und 50 Nanosekunden dauern kann, ist der jeweilige Detektor während einer Lawine für weitere eintreffende Photonen unempfindlich. Die Detektoren können folglich eine Totzeit zwischen 20 und 50 Nanosekunden aufweisen.

Besonders bevorzugt sind die Detektoren zumindest zum Teil mit Time-to-Digital-Convertern (TDCs) gekoppelt, um die Zeitdauer zwischen dem Aussenden des Sendelichts und der Erfassung des Empfangslichts zu bestimmen. Bei einem Time-to-Digital-Converter handelt es sich um ein Bauelement, das kurze Zeitintervalle erfassen und digital ausgeben kann. Ein solcher TDC kann eine zeitliche Auflösung von besser als einer Nanosekunde, bevorzugt von besser als 100 Pikosekunden, aufweisen. Mittels der TDCs kann die Entfernung zu einem Objekt somit relativ genau bestimmt werden.

Gemäß einer weiteren vorteilhaften Ausführungsform werden nur diejenigen Detektoren mit jeweils einem Time-to-Digital-Converter gekoppelt, die in der Teilregion liegen, die zu einem jeweiligen Zeitpunkt ausgewertet wird.

Der Einsatz von TDCs kann aufwendig und teuer sein, weshalb es üblicherweise gewünscht ist, möglichst wenige TDCs zu verwenden. Aufgrund der Aufteilung der Auswertung auf mehrere Teilregionen wird es ermöglicht, weniger TDCs zu verwenden, wodurch das Verfahren kostengünstiger und wirtschaftlicher durchgeführt werden kann. Insbesondere können die Teilregionen so gewählt werden, dass in jeder Teilregion maximal so viele Detektoren vorgesehen sind, wie TDCs vorhanden sind. Beispielsweise können in einer Vorrichtung 25 TDCs vorhanden sein, wobei eine Teilregion maximal 25 Detektoren umfasst. Die 25 TDCs können dann nacheinander mit den jeweils 25 Detektoren einer jeden Teilregion verschaltet werden. Eine derartige Verschaltung kann bevorzugt mittels einer Schaltmatrix vorgenommen werden. Allgemein können beispielsweise zumindest zwanzigmal mehr Detektoren als TDCs vorgesehen sein.

Weiterer Gegenstand der Erfindung ist eine Vorrichtung zur Detektion eines Objekts, mit einer Lichtquelle und einer Detektionsvorrichtung, die mehrere Detektoren aufweist. Die Vorrichtung weist eine Steuereinheit auf, die zur Durchführung des oben erläuterten Verfahrens ausgebildet ist.

Bevorzugt sind die Detektoren der Vorrichtung Single-Photon Avalanche Dioden (SPADs). Weiter bevorzugt ist zumindest ein Teil der Detektoren mit Time-to-Digital Convertern (TDCs) gekoppelt.

Für die erfindungsgemäße Vorrichtung gelten die Erläuterungen zu dem erfindungsgemäßen Verfahren entsprechend, insbesondere hinsichtlich Vorteilen und bevorzugten Ausführungsformen.

Nachfolgend wird die Erfindung rein beispielhaft unter Bezugnahme auf die Zeichnungen beschrieben. Es zeigen:
- Fig. 1: eine erfindungsgemäße Vorrichtung in schematischer Ansicht; und
- Fig. 2: eine Detektionsvorrichtung in schematischer Ansicht.

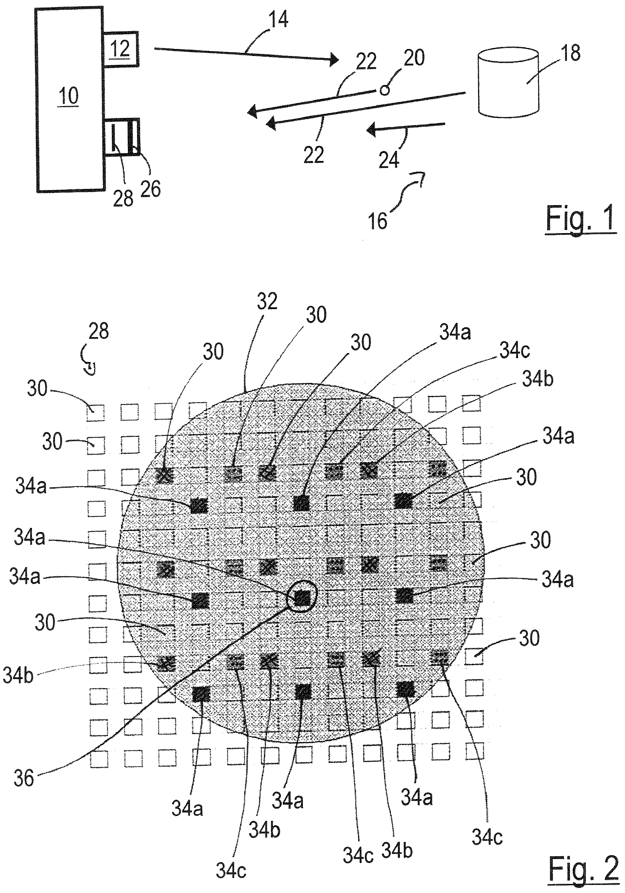

Fig. 1 zeigt eine Objekterkennungsvorrichtung 10, welche eine Lichtquelle 12 in Form einer Laserdiode umfasst. Die Lichtquelle 12 strahlt wiederholt Pulse von Laserlicht, das heißt Sendelicht 14, in einen Detektionsbereich 16 aus. In dem Detektionsbereich 16 befindet sich ein Objekt 18 sowie ein Staubpartikel 20.

Sowohl das Objekt 18 als auch das Staubpartikel 20 strahlen das Sendelicht 14 in Form von Empfangslicht 22 zu der Objekterkennungsvorrichtung 10 zurück. Neben dem Empfangslicht 22 ist die Objekterkennungsvorrichtung 10 auch Streulicht 24 ausgesetzt. Das empfangene Licht 22, 24 wird mittels einer Optik 26 gefiltert und auf eine Detektionsvorrichtung 28 projiziert.

Die Detektionsvorrichtung 28 ist in Fig. 2 in Draufsicht gezeigt. Die Detektionsvorrichtung 28 umfasst eine Vielzahl von Detektoren 30, die als Single-Photon-Avalanche-Dioden (SPADs) ausgebildet sind. Die Detektoren 30 sind in einem gleichmäßigen, matrixartigen Raster angeordnet. Von den Detektoren 30 können jeweils neun mittels einer (nicht gezeigten) Schaltmatrix mit neun Time-to-Digital-Convertern (TDCs - ebenfalls nicht gezeigt) elektrisch verbunden werden.

In Fig. 2 ist ein kreisförmiger Auswertebereich 32, das heißt eine sogenannte "Region of Interest" (ROI) eingezeichnet. Der Auswertebereich wird anhand von Intensitätsbestimmungen des einfallenden Lichts 22, 24 definiert und liegt etwa an der Position, an der das von dem Objekt 18 rückgestrahlte Empfangslicht 22 auf die Detektionsvorrichtung 28 projiziert wird. Innerhalb des Auswertebereichs 32 sind drei Teilregionen 34a, 34b, 34c definiert, die jeweils neun Detektoren 30 umfassen. Die Teilregionen 34 sind jeweils von Detektoren 30 gebildet, die hier nicht benachbart zueinander angeordnet sind. Dementsprechend bilden die Teilregionen jeweils 34 keine zusammenhängenden Flächen. Innerhalb des Auswertebereichs 32 und an der Position eines zur Teilregion 34a gehörigen Detektors 30 wird von dem Staubpartikel 20 stammendes Empfangslicht 22 auf die Detektionsvorrichtung 28 projiziert. Dieser Bereich wird hier als Fehldetektionsbereich 36 bezeichnet.

Im Betrieb der Objekterkennungsvorrichtung 10 sendet die Lichtquelle 12 wiederholt Pulse von Sendelicht 14 in den Detektionsbereich 18 aus, woraufhin anhand der Intensitätsunterschiede zwischen Empfangslicht 22 und Streulicht 24 der Auswertebereich 32 festgelegt wird.

Innerhalb des Auswertebereichs werden anschließend immer dieselben drei Teilregionen 34 verwendet. Nach der Festlegung des Auswertebereichs 32 und der damit einhergehenden Festlegung der Teilregionen 34 wird zunächst mit der Auswertung der Teilregion 34a begonnen. Hierfür sendet die Lichtquelle 12 zweihundertfünfzig Pulse von Sendelicht 14 in den Detektionsbereich 18, wobei mittels der neun Detektoren 30, die der Teilregion 34a zugeordnet sind, und der mit den Detektoren 30 gekoppelten TDCs 250-mal ein Entfernungswert bestimmt wird.

In der Teilregion 34a liefert der im Fehldetektionsbereich 36 liegende Detektor 30 dabei einen fehlerhaften Wert, der von dem Staubpartikel 20 herrührt. Die Auswertung der Teilregion 34a erfolgt beispielsweise über Mittelung über sämtliche in der Teilregion 34a ermittelten Entfernungswerte. Zusätzlich zu den Entfernungswerten kann auch noch eine Intensitätsmessung vorgenommen werden.

Nach Abschluss der Auswertung für die Teilregion 34a, bei welcher ein Ergebnis-Entfernungswert berechnet wird, wird zur nächsten Teilregion 34b übergegangen, wobei die neun vorhandenen TDCs nun mit den Detektoren 30 aus der Teilregion 34b gekoppelt werden.

Auch hier werden von der Lichtquelle 12 nun wieder 250 Pulse von Sendelicht 14 in den Detektionsbereich 16 ausgesandt. Wie bereits erläutert, wird für jeden der 250 Pulse nun eine Entfernungsmessung mittels der Detektoren 30 der Teilregion 34b vorgenommen. Da die Teilregion 34b nicht den Fehldetektionsbereich 36 umfasst, wird mittels der Detektoren 30 der Teilregion 34b jeweils korrekterweise eine Entfernung zu dem Objekt 18 und nicht zu dem Staubpartikel 20 erfasst. Der für die Teilregion 34b berechnete Ergebnis-Entfernungswert gibt die Entfernung zu dem Objekt 18 folglich mit hoher Genauigkeit an.

In entsprechender Weise wird für die Teilregion 34c verfahren. Bei der gemeinsamen Auswertung aller Teilregionen 34 ist nun von Vorteil, dass der Fehldetektionsbereich 36, das heißt das Staubpartikel 20, nur bei einem Drittel der Messungen überhaupt berücksichtigt wird und dementsprechend das Gesamtergebnis der Messung, d.h. die Kombination bzw. den Durchschnitt der Ergebnis-Entfernungswerte, nur minimal verfälscht. Die Anwesenheit und die Entfernung des Objekts 18 zu der Objekterkennungsvorrichtung 10 kann somit robust, zuverlässig und genau ermittelt werden.

### Bezugszeichenliste

- 10: Objekterkennungsvorrichtung
- 12: Lichtquelle
- 14: Sendelicht
- 16: Detektionsbereich
- 18: Objekt
- 20: Staubpartikel
- 22: Empfangslicht
- 24: Streulicht
- 26: Optik
- 28: Detektionsvorrichtung
- 30: Detektor
- 32: Auswertebereich
- 34a - 34c: Teilregionen
- 36: Fehldetektionsbereich

## Patentansprüche

1. Verfahren zur Detektion eines Objekts (18), bei welchem
- in einen Detektionsbereich (16) mittels einer Lichtquelle (12) wiederholt Pulse von Sendelicht (14) ausgesandt werden,
- aus dem Detektionsbereich (16) empfangenes Empfangslicht (22) mittels einer Detektionsvorrichtung (28), die mehrere Detektoren (30) aufweist, erfasst wird,
- ein mehrere Detektoren (30) umfassender Auswertebereich (32) definiert wird, innerhalb dessen Empfangslicht (22) auf die Detektoren trifft, wobei anhand der Intensität des Empfangslichts (22) die Position und/oder die Größe des Auswertebereichs (32) festgelegt wird,
**dadurch gekennzeichnet, dass**
- innerhalb des Auswertebereichs (32) mehrere Teilregionen (34) festgelegt werden,
- unter Verwendung mehrerer aufeinander folgender Pulse von Sendelicht (14) die Teilregionen (34) zumindest teilweise nacheinander ausgewertet werden, und
- die Auswertungen der Teilregionen (34) kombiniert werden, um die Anwesenheit eines Objekts (18) in dem Detektionsbereich (16) festzustellen.

2. Verfahren nach Anspruch 1,
**dadurch gekennzeichnet, dass**
jede Teilregion (34) gleich viele Detektoren (30) umfasst.

3. Verfahren nach zumindest einem der vorstehenden Ansprüche,
dadurch g**ekennzeichnet**, dass
die Fläche zumindest einer Teilregion (34) verteilt angeordnet, rechteckig oder quadratisch ist.

4. Verfahren nach zumindest einem der vorstehenden Ansprüche,
dadurch g**ekennzeichnet**, dass
sich zumindest zwei der Teilregionen (34) zumindest bereichsweise überlappen oder aneinander angrenzen.

5. Verfahren nach zumindest einem der vorstehenden Ansprüche,
**dadurch gekennzeichnet, dass**
alle Teilregionen (34) unterschiedlich gewählt werden.

6. Verfahren nach zumindest einem der vorstehenden Ansprüche,
**dadurch gekennzeichnet, dass**
für die Auswertung jeder Teilregion (34) mehr als ein Puls, bevorzugt zumindest 50 Pulse, besonders bevorzugt zumindest 250 Pulse, von Sendelicht (14) verwendet wird/werden.

7. Verfahren nach zumindest einem der vorstehenden Ansprüche,
**dadurch gekennzeichnet, dass**
die Reihenfolge der Auswertung der Teilregionen (34) in Abhängigkeit von dem Abstand der jeweiligen Teilregion (34) zu einem Referenzpunkt festgelegt wird.

8. Verfahren nach zumindest einem der vorstehenden Ansprüche,
**dadurch gekennzeichnet, dass**
anhand der Zeitdauer zwischen dem Aussenden des Sendelichts (14) und der Erfassung des Empfangslichts (22) die Anwesenheit und/oder der Abstand eines Objekts (18) in dem Detektionsbereich (16) festgestellt wird.

9. Verfahren nach zumindest einem der vorstehenden Ansprüche,
**dadurch gekennzeichnet, dass**
die Detektoren (30) Single-Photon Avalanche Dioden (SPADs) sind.

10. Verfahren nach zumindest einem der vorstehenden Ansprüche,
**dadurch gekennzeichnet, dass**
die Detektoren (30) mit Time-to-Digital Convertern (TDCs) gekoppelt sind, um die Zeitdauer zwischen dem Aussenden des Sendelichts (14) und der Erfassung des Empfangslichts (22) zu bestimmen.

11. Verfahren nach Anspruch 10,
**dadurch gekennzeichnet, dass**
nur diejenigen Detektoren (30) mit jeweils einem Time-to-Digital Converter gekoppelt werden, die in der Teilregion (34) liegen, die zu einem jeweiligen Zeitpunkt ausgewertet wird.

12. Vorrichtung (10) zur Detektion eines Objekts, mit einer Lichtquelle (12) und einer Detektionsvorrichtung (28), die mehrere Detektoren (30) aufweist,
**gekennzeichnet durch**
eine Steuereinheit, die zur Durchführung des Verfahrens gemäß einem der Ansprüche 1 bis 11 ausgebildet ist.

13. Vorrichtung (10) nach Anspruch 12,
**dadurch gekennzeichnet, dass**
die Detektoren (30) Single-Photon Avalanche Dioden (SPADs) sind.

14. Vorrichtung (10) nach Anspruch 12 oder 13,
**dadurch gekennzeichnet, dass**
zumindest ein Teil der Detektoren (30) mit Time-to-Digital Convertern (TDCs) gekoppelt ist.

## Claims

1. A method of detecting an object (18), in which
- pulses of transmitted light (14) are repeatedly transmitted into a detection zone (16) by means of a light source (12);
- received light (22) received from the detection zone (16) is detected by means of a detection apparatus (28) which has a plurality of detectors (30); and
- an evaluation zone (32) is defined which comprises a plurality of detectors (30) and within which received light (22) is incident onto the detectors, with the position and/or the size of the evaluation zone (32) being fixed by means of the intensity of the received light (22),
**characterized in that**
- a plurality of part regions (34) are fixed within the evaluation zone (32);
- **in that** at least some of the part regions (34) are evaluated sequentially using a plurality of consecutive pulses of transmitted light (14); and
- **in that** the evaluations of the part regions (34) are combined to determine the presence of an object (18) in the detection zone (16).

2. A method in accordance with claim 1,
**characterized in that**
each part region (34) comprises the same number of detectors (30).

3. A method in accordance with at least one of the preceding claims,
**characterized in that**
the surface of at least one part region (34) is arranged in a distributed manner, is rectangular or is square.

4. A method in accordance with at least one of the preceding claims,
**characterized in that**
at least two of the part regions (34) overlap at least regionally or are adjacent to one another.

5. A method in accordance with at least one of the preceding claims,
**characterized in that**
all the part regions (34) are selected as different.

6. A method in accordance with at least one of the preceding claims,
**characterized in that**
more than one pulse, preferably at least 50 pulses, particularly preferably at least 250 pulses, of transmitted light (14) is/are used for the evaluation of each part region (34).

7. A method in accordance with at least one of the preceding claims,
**characterized in that**
the order of the evaluation of the part regions (34) is fixed in dependence on the distance of the respective part region (34) from a reference point.

8. A method in accordance with at least one of the preceding claims,
**characterized in that**
the presence and/or the distance of an object (18) in the detection zone (16) is/are determined by means of the time duration between the transmission of the transmitted light (14) and the detection of the received light (22).

9. A method in accordance with at least one of the preceding claims,
**characterized in that**
the detectors (30) are single-photon avalanche diodes (SPADs).

10. A method in accordance with at least one of the preceding claims,
**characterized in that**
the detectors (30) are coupled to time-to-digital converters (TDCs) to determine the time duration between the transmission of the transmitted light (14) and the detection of the received light (22).

11. A method in accordance with claim 10,
**characterized in that**
only those detectors (30) are coupled to a respective time-to-digital converter which lie in the part region (34) which is evaluated at a respective point in time.

12. An apparatus (10) for the detection of an object, comprising a light source (12) and a detection apparatus (28) which has a plurality of detectors (30),
**characterized by**
a control unit which is configured for carrying out the method in accordance with any one of the claims 1 to 11.

13. An apparatus (10) in accordance with claim 12,
**characterized in that**
the detectors (30) are single-photon avalanche diodes (SPADs).

14. An apparatus (10) in accordance with claim 12 or claim 13,
**characterized in that**
at least some of the detectors (30) are coupled to time-to-digital converters (TDCs).

## Revendications

1. Procédé pour la détection d'un objet (18), dans lequel
- des impulsions de lumière d'émission (14) sont émises de façon répétée dans une zone de détection (16) au moyen d'une source de lumière (12),
- la lumière de réception (22) reçue depuis la zone de détection (16) est détectée au moyen d'un dispositif de détection (28) qui comprend plusieurs détecteurs (30),
- une zone d'évaluation (32) incluant plusieurs détecteurs (30) est définie, à l'intérieur de laquelle la lumière de réception (22) tombe sur les détecteurs, et la position et/ou la taille de la zone d'évaluation (32) est fixée en se basant sur l'intensité de la lumière de réception (22),
**caractérisé en ce que**
- plusieurs régions partielles (34) sont fixées à l'intérieur de la zone d'évaluation (32),
- les régions partielles (34) sont évaluées au moins partiellement successivement en utilisant plusieurs impulsions successives de lumière d'émission (14), et
- les évaluations des régions partielles (34) sont combinées, pour constater la présence d'un objet (18) dans la zone de détection (16).

2. Procédé selon la revendication 1,
**caractérisé en ce que**
chaque région partielle (34) comprend le même nombre de détecteurs (30).

3. Procédé selon l'une au moins des revendications précédentes,
**caractérisé en ce que**
la surface d'au moins une région partielle (34) est disposée de façon répartie, elle est rectangulaire ou carrée.

4. Procédé selon l'une au moins des revendications précédentes,
**caractérisé en ce que**
au moins deux des régions partielles (34) se chevauchent ou sont adjacentes l'une à l'autre, au moins localement.

5. Procédé selon l'une au moins des revendications précédentes,
**caractérisé en ce que**
toutes les régions partielles (34) sont choisies différemment.

6. Procédé selon l'une au moins des revendications précédentes,
**caractérisé en ce que**
pour l'évaluation de chaque région partielle (34), plus d'une impulsion, de préférence au moins 50 impulsions, de manière particulièrement préférée au moins 250 impulsions de lumière d'émission (14) sont utilisées.

7. Procédé selon l'une au moins des revendications précédentes,
**caractérisé en ce que**
l'ordre chronologique de l'évaluation des régions partielles (34) est fixé en fonction de la distance de la région partielle respective (34) par rapport à un point de référence.

8. Procédé selon l'une au moins des revendications précédentes,
**caractérisé en ce que**
la présence et/ou la distance d'un objet (18) dans la zone de détection (16) est constatée en se basant sur la durée temporelle entre l'émission de la lumière d'émission (14) et la détection de la lumière de réception (22).

9. Procédé selon l'une au moins des revendications précédentes,
**caractérisé en ce que**
les détecteurs (30) sont des diodes à avalanche à photon unique (SPAD).

10. Procédé selon l'une au moins des revendications précédentes,
**caractérisé en ce que**
les détecteurs (30) sont couplés à des convertisseurs temps-numérique (TDC) pour déterminer la durée temporelle entre l'émission de la lumière d'émission (14) et la détection de la lumière de réception (22).

11. Procédé selon la revendication 10,
**caractérisé en ce que**
uniquement ceux des détecteurs (30) sont couplés chacun à un convertisseur temps-numérique, qui se situent dans la région partielle (34) qui est évaluée à un instant respectif.

12. Dispositif (10) de détection d'un objet, comportant une source de lumière (12) et un dispositif de détection (328) qui comprend plusieurs détecteurs (30),
**caractérisé par**
une unité de commande qui est réalisée pour mettre en oeuvre le procédé selon l'une des revendications 1 à 11.

13. Dispositif (10) selon la revendication 12,
**caractérisé en ce que**
les détecteurs (30) sont des diodes à avalanche à photon unique (SPAD).

14. Dispositif (10) selon la revendication 12,
**caractérisé en ce que**
une partie au moins des détecteurs (30) est couplée à des convertisseurs temps-numérique (TDC).
